# EUROPÄISCHE PATENTSCHRIFT

(11) **EP 1 849 752 B1**
(45) Veröffentlichungstag und Bekanntmachung des Hinweises auf die Patenterteilung: **12.03.2014**
(21) Anmeldenummer: 07107065.0
(22) Anmeldetag: 26.04.2007
(51) Int. Cl.: C03B 5/235, F27D 21/00

(54) **Verfahren zur Kontrolle eines instationären Betriebszustandes in einer Thermoprozessanlage**
Method for monitoring the non-stationary operating status in a thermal processing plant
Procédé destiné au contrôle d'un état de fonctionnement instable dans une installation de traitement thermique

(30) Priorität: 26.04.2006 DE 102006020092
(43) Veröffentlichungstag der Anmeldung: 31.10.2007
(73) Patentinhaber: Ingenieurbüro Dipl. -Ing. Matthias Franke Glas Technologie-Service, 01468 Moritzburg (DE)
(72) Erfinder: Franke, Matthias, 01468, Moritzburg / Friedewald (DE); Dr. Pfitzner, Norbert, 01259 Dresden (DE); Prof. Dr. Walter, Gerd, 01259 Dresden (DE)
(74) Vertreter: Schneider, Henry

(56) Entgegenhaltungen:
- "ATTREMPAGE D'UN FOUR DE VERRE/GLASS FURNACE HEATING" VERRE, INSTITUT DU VERRE, PARIS, FR, Bd. 8, Nr. 3, Juni 2002 (2002-06), Seiten 28-31, XP001123092 ISSN: 0984-7979
- TRIBOLLET J-C ET AL: "HOW STRESSES DEVELOP DURNG HEATING UP OF AZS FUSED-CAST BLOCKS" GLASS INDUSTRY, GLASS INDUSTRY MAGAZINE. NEW YORK, US, Bd. 76, Nr. 11, 10. Oktober 1995 (1995-10-10), Seiten 26,29-32, XP000535683 ISSN: 0017-1026
- WERSCHY MATTHIAS ET AL: "Visual depiction of the structural condition and temperature fields in the combustion chamber of glass melting furnaces" GAS, WAERME INTERNATIONAL, VULKAN VERLAG, ESSEN, DE, Bd. 49, Nr. 11, November 2000 (2000-11), Seiten 567-571, XP009087472 ISSN: 0020-9384
- HÜTTENTECHNISCHE VEREINIGUNG DER DEUTSCHEN GLASINDUSTRIE: "HVG-Fortbildungskurse 2005 Glasschmelzofenbau Feuerfeste Werkstoffe und konstruktive Merkmale" 2005, VERLAG DER DEUTSCHEN GLASTECHNISCHEN GESELLSCHAFT , OFFENBACH/MAIN , XP002447837 * Seite 38 - Seite 39 * * Seite 160 - Seite 162 *
- TOOLEY, F.V.: "The Handbook of Glass Manufacture" 1984, ASHLEE PUBLISHING CO., INC. , NEW YORK 1 , XP002447838 * Seite 264, Absatz 2 - Seite 265 * * Seite 369, Absatz 9 - Seite 372 *

## Beschreibung

Für die Länge einer Ofenreise von Thermoprozessanlagen wie beispielsweise von Glasschmelzwannen sind nicht allein die Betriebsweise, der Bau und die Materialqualität ausschlaggebend. Die Inbetriebnahme oder "das Tempern" von Ofenbauteilen hat einen großen Einfluss auf die Standsicherheit und die Haltbarkeit von Industrieöfen und damit der Thermoprozessanlage.

Beispielsweise kommt es beim Aufheizen einer Glasschmelzwanne auf ihre Betriebstemperatur aufgrund der temperaturbedingten Ausdehnung der Materialien zu Verformungen der Bauteile und zum Entstehen von Rissen und Fugen.

Aus "Attrempage d'un four de verre/glass furnace heating", Verre, Institut du verre, Paris, FR, Bd. 8, Nr. 3, Juni 2002 (2002-06), Seiten 28-31, XP001123092, ist ein Verfahren zur Kontrolle eines instationären Betriebszustandes in einer Thermoprozessanlage bekannt, bei der das Aufheizen oder Abheizen der Thermoprozessanlage auf Grundlage einer zeitabhängigen Temperaturführungskurve erfolgt, wobei Temperaturmesswerte erfasst und Korrekturen an einem Einspannsystem der Thermoprozessanlage vorgenommen werden.

Aus Tribollet J-C et al "How stresses develop during heating up of AZS fused-cast blocks", Glass industry, Glass industry magazine, New York, US, Bd. 76, Nr. 11, 10. Oktober 1995 (1995-10-10), Seiten 26, 29-32, XP000535683 ist bekannt, numerische Berechnungen von Spannungen und Verformungen innerhalb eines Bauteiles einer Thermoprozessanlage durchzuführen, wobei die numerische Berechnung auf Grundlage von geometrischen Parametern, von Materialwerten in Abhängigkeit eines bestimmten Temperaturverlaufs erfolgt.

Aus G. Walter und S. Krein: Simulation von Temperstrategien für die Gewölbe in Glasschmelzanlagen, GASWÄRME International 43 (1994) Heft 9, Seite 435-439 XP-009139587 ist bekannt, mittels eines Berechnungsmodells Messwerte von Temperatur- und Wegaufnehmern bei der Berechnung von Betriebszuständen einer Thermoprozessanlage vor dem eigentlichen Prozessbeginn des Aufheizens oder Abheizens einer Thermoprozess-anlage durchzuführen.

Aufgabe der Erfindung ist es, ein Verfahren zur Kontrolle eines instationären Betriebszustandes in einer Thermoprozessanlage anzugeben, durch welches Schäden an den einzelnen Bauteilen der Anlage verringert oder ganz vermieden werden können. Es handelt sich dabei gleichzeitig um ein Verfahren zur Visualisierung und Prognostizierung des instationären Betriebszustands.

Erfindungsgemäß wird diese Aufgabe mittels eines Verfahrens mit den im Anspruch 1 genannten Merkmalen gelöst. Folgende Verfahrensschritte sind vorgesehen:
- Aufheizen oder Abheizen der Thermoprozessanlage auf Grundlage einer zeitabhängigen Temperaturführungskurve T(t);
- Erfassen von Temperaturmesswerten T_{MW}(t, r) während des Aufheizens oder Abheizens an verschiedenen Positionen der Thermoprozessanlage, wobei die Temperaturmesswerte T_{MW}(t, r) durch ein thermographisches Verfahren durch den Einsatz einer oder mehrerer Kameras mit Temperaturfeldvisualisierung erfasst werden;
- numerische Berechnung von Spannungen und Verformungen innerhalb mindestens eines Bauteils oder einer Bauteilgruppe der Thermoprozessanlage, wobei die numerische Berechnung zumindest auf Grundlage von geometrischen Parametern, von Materialwerten und auf Grundlage der erfassten Temperaturmesswerte T_{MW}(t, r) erfolgt;
- Vornahme von Korrekturen auf Grundlage der numerischen Berechnung.

Unter Korrekturen werden insbesondere alle Handlungen verstanden, welche den instationären Betriebszustand in seiner zeitlichen Entwicklung derart verändern, dass eine Schädigung oder mechanische Beeinträchtigung des Bauteils oder der Bauteilgruppe vermieden werden können. Ziel ist dabei eine schonende Behandlung des statischen Systems (z. B. Vermeidung von Fugenbildung, Minimierung der auftretenden Druckspannungen). Die Korrekturen können unterschiedlicher Natur sein. So kann auf Grundlage der numerischen Berechnung eine Korrektur in Form einer Modifikation der Temperaturführungskurve T(t) oder einer statischen Modifikation des Einspannsystems, welches einzelne Bauteile oder Bauteilgruppen statisch trägt oder stützt, erfolgen. Das Einspannsystem kann aus verschiedenen Elementen wie beispielsweise Widerlagern, Ankern, Druckbolzen, Zugbolzen, Auflageschienen, Querverbindern oder dergleichen bestehen.

Durch das der numerischen Berechnung zugrundeliegende Simulationsmodell wird der typische Erstinbetriebnahmeverlauf in seiner Temperaturführung und der mechanischen Veränderung der einzelnen Bauteile einer Thermoprozessanlage abgebildet. In das Modell fließt auch der bisherige Kenntnisstand des Verhaltens von Hochtemperaturanlagen bei Inbetriebnahme ein, wie z. B. bezüglich des Materialverschleißes. Die numerische Berechnung findet im Voraus statt, so dass das mechanische Verhalten der Bauteile und der Temperaturverlauf schon zu einem späteren Zeitpunkt bekannt sind. Die Simulation begleitet somit den instationären Prozess und prognostiziert die Verformung der Ofenbauteile für einen folgenden Zeitabschnitt (beispielsweise für die folgenden 6, 12, 24 und 48 h), woraus eine Strategie für die Verstellung des Einspannsystems abgeleitet werden kann. Wenn der reale Prozess so verläuft wie berechnet, werden die vom Programm berechneten Korrekturen ausgeführt. Das Erstellen von verschiedenen Szenarien und Strategien des Prozesses unter verschiedenen zeitlichen Verläufen der Randbedingungen ist durch einfache Modifikation des Berechnungsprogramms möglich.

Bevorzugt ist vorgesehen, dass im Rahmen der numerischen Berechnung Erwärmungs- und Dehnungsvorgänge im Bauteil oder in der Bauteilgruppe berücksichtigt werden. Die für die numerische Berechnung benötigten Materialwerte spiegeln das thermische Verhalten der benutzten Feuerfestmaterialen beim Aufheizen und bei Betriebstemperaturen in Hochtemperaturanlagen wider. Es handelt sich typischerweise um folgende physikalischen Größen:
Dichte in kg/m
Wärmeleitfähigkeit in W/(m*K)
spez. Wärmekapazität in J/(kg*K)
thermischer Längenausdehnungskoeffizient in 1/K
E-Modul in N/m².

Bevorzugt erfolgt die numerische Berechnung mit Hilfe einer Finite-Elemente-Methode, welche für die Berechnung von Druckspannungen in Bauteilen und von Wärmeleitungsproblemen besonders geeignet ist. Außerdem ist bevorzugt, dass bei der numerischen Berechnung eine Angleichung an in der Thermoprozessanlage insbesondere durch Wegaufnehmer erfasste Positionsmesswerte erfolgt. Durch diesen Abgleich wird die Genauigkeit der Simulationsergebnisse erhöht.

Vorzugsweise werden Temperaturdaten durch eine spezielle, visuelle und auf Thermografie beruhende Messtechnik geliefert. Daher ist vorgesehen, dass die Temperaturmesswerte T_{MW}(t, r) durch ein thermografisches Verfahren, insbesondere durch den Einsatz einer oder mehrerer Kameras mit Temperaturfeldvisualisierung, erfasst werden.

In weiterer bevorzugter Ausführungsform der Erfindung ist vorgesehen, dass die Thermoprozessanlage ein Gewölbe umfasst, deren Widerlager durch ein Ankersystem gestützt wird, und dass auf Grundlage der numerischen Berechnung eine Korrektur in Form einer Verschiebung des Ankersystems vorgenommen wird. Durch das Simulationsprogramm wird eine Strategie für die Verstellung der Widerlager- und Ankersysteme erstellt. Die Korrekturen werden zeitnah durchgeführt. Messwerte und numerische Randbedingungen werden ständig überwacht und verglichen, bei Abweichungen wird das Rechenmodell auf den "Ist"-Zustand abgeglichen und präzisierte Prognosen für die nächste 24 h erstellt.

Bevorzugt umfasst das Ankersystem Paare von vertikalen Stehankern, welche über das Gewölbe hinweg durch horizontale Zuganker verbunden sind, wobei die Widerlager des Gewölbes auf Widerlagerschienen angeordnet sind, welche mit den Stehankern verbunden oder an diesen befestigt sind.

Die Erfindung wird nachfolgend in einem Ausführungsbeispiel anhand der zugehörigen Zeichnungen näher erläutert. Es zeigen:
- Figur 1: eine Oberansicht einer Großraumglasschmelzwanne;

### - Fortsetzung auf Seite 4 der ursprünglichen Beschreibung -

- Figur 2: eine dreidimensionale Darstellung des Schmelzwannengewölbes und
- Figur 3: den zeitlichen Verlauf einer Temperaturführungskurve sowie des Scheitelanstiegs des Schmelzwannengewölbes.

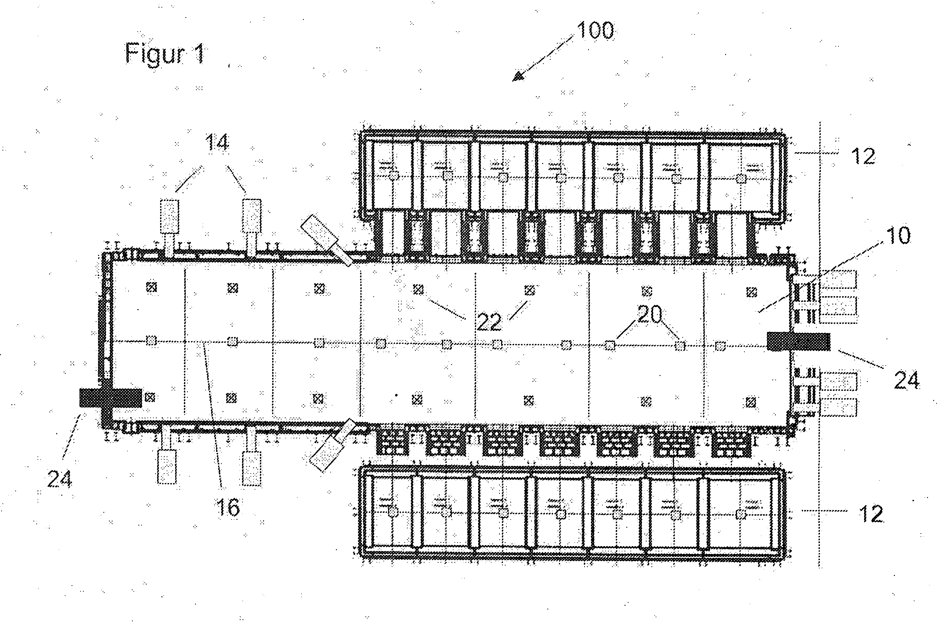

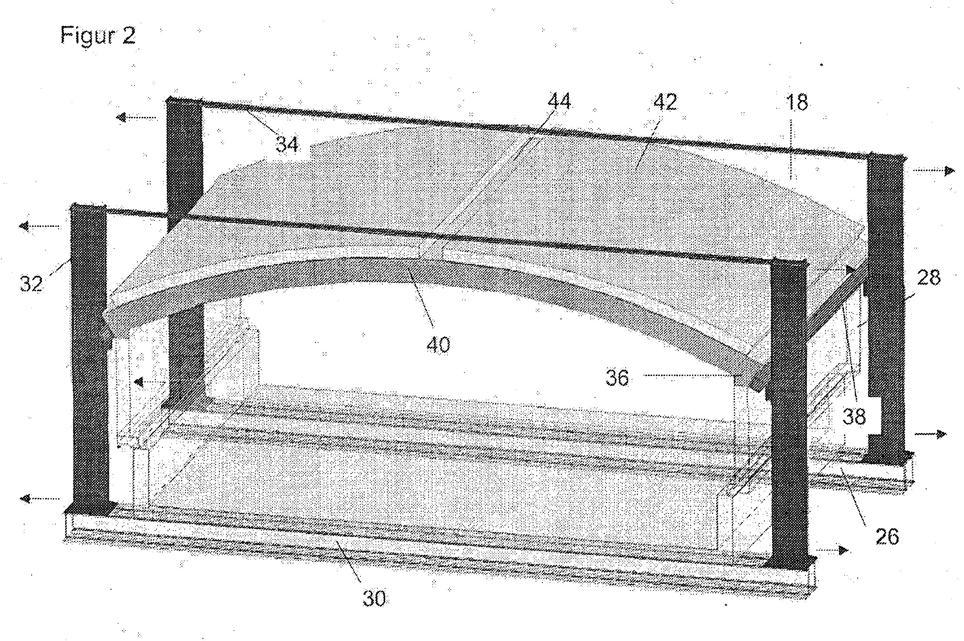

Figur 1 zeigt eine Oberansicht einer insgesamt mit 100 bezeichneten Thermoprozessanlage, hier einer Großraumglasschmelzwanne. Sie umfasst einen Hauptprozessraum 10 und zwei Nebenprozessräume oder Regeneratoren 12. Das gesamte Ofensystem besteht aus Bauteilgruppen aus Feuerfestmaterial und einer sie umgebenden Stahlkonstruktion, welche das Ofensystem zusammenhält und deren Ausmaße bei der Inbetriebnahme der thermischen Ausdehnung der Bauteile angepasst werden müssen, da sie sich nicht mit der gleichen Geschwindigkeit wie diese ausdehnt. An den Seitenwänden des Hauptprozessraumes 10 sind Aufheizbrenner 14 angeordnet, durch welche auf Grundlage einer vorgegebenen, noch näher zu beschreibenden, Temperaturführungskurve die Temperatur im Hauptprozessraum 10 erhöht wird. Der Hauptprozessraum 10 weist ein Gewölbe 18 (vgl. Figur 2) auf, welches während der Inbetriebnahme der Thermoprozessanlage aufgrund der Temperaturerhöhung ansteigt. Durch Wegaufnehmer 20, welche entlang einer Längsachse 16 der Glasschmelzwanne positioniert sind, wird der Anstieg des Gewölbes 18 gemessen. Optional kann der Anstieg an weiteren Messpunkten 22 manuell erfasst werden.

Die Temperatur im Hauptprozessraum 10 wird an verschiedenen Positionen ständig überwacht. Die so ermittelte Funktion der Zeit und des Ortes wird als Input für ein noch zu beschreibendes numerisches Modell verwendet. Vorzugsweise wird dabei die Temperatur auf der Innenoberfläche verschiedener Bauteile oder Bauteilgruppen ermittelt. Aufgrund der auftretenden Temperaturabweichungen zwischen verschiedenen Bereichen des Hauptprozessraums 10 ist es bevorzugt, das Temperaturfeld durch ein thermographisches Verfahren zu visualisieren und somit eine zwei- oder dreidimensionale Darstellung der Temperaturverteilung zu ermitteln. Dazu werden an den Seitenwänden des Hauptprozessraumes 10 Kameras mit Temperaturfeldvisualisierung 24 angeordnet, welche ständig Temperaturfeldverteilungsbilder erzeugen.

Figur 2 zeigt eine perspektivische Darstellung eines Abschnitts des Hauptprozessraumes 10. Ein Bassin 26, Stirnwände 28 und das darauf angeordnete Gewölbe 18 bestehen aus Feuerfestmaterial. Umgeben wird dieses System durch eine Stahlkonstruktion, bestehend aus einem Stahlfundament 30, Stehankern 32 und Zugankern 34. Das Gewölbe 18 drückt mit seinem Eigengewicht seine Widerlager 36 an Widerlagerschienen 38 an, welche senkrecht zu den Stehankern 32 verlaufen und an diesen befestigt sind. Das Gewölbe 18 besteht aus einem Gewölbestein 40 aus Silica und einer darauf angeordneten Wärmedämmungsschicht 42 aus leichtem Stein, welche das Gewölbe 18 isoliert. Zur Kontrolle, dass am Scheitel des Gewölbesteines 40 keine Schädigung in Form von Rissen oder Fugen auftritt sowie zur Positionierung der Wegaufnehmer 20, welche oberhalb des Gewölbes 18 angeordnet werden, ist in der Wärmedämmungsschicht 42 eine rillenförmige Aussparung 44 vorgesehen. Es kann auch eine größere Anzahl von Wärmedämmungsschichten übereinander angeordnet sein.

Während der Inbetriebnahme der Glasschmelzwanne 100 kommt es durch die Temperaturfeldänderung zur Dehnung der Bauteile begleitet von einem Scheitelanstieg des Gewölbes 18 und einer Verstellung des Ankersystems 32, 34 und der Widerlager 36, 38. Bei einem zu großen oder zu schnellen Anstieg des Gewölbes 18 besteht die Gefahr der Entstehung zu hoher Spannungen oder der Entstehung von Rissen und Fugen. Dies wird dadurch verhindert, dass die Stehanker 32 seitlich verschoben werden (in Pfeilrichtung, vgl. Figur 2). Durch diese seitliche Verschiebung der Stehanker 32 kommt es zu einer Senkung des Gewölbes 18, der Schließung etwaiger Fugen und dem Abbau von Materialspannungen. Die seitliche Verschiebung der Stehanker 32 muss an ihren beiden Enden erfolgen (vgl. Position der Pfeile in Figur 2). An einem dem Bassin 26 gegenüberliegenden Ende werden die Zuganker 34 durch einen nicht dargestellten Schraubmechanismus verlängert, wodurch die Stehanker 32 nach außen gedrückt werden. Ein ähnlicher Mechanismus wird an der dem Bassin 26 zugewandten Seite angewandt. Die durch die seitliche Verschiebung der Stehanker 32 gegebenen Korrekturen erfolgen fortlaufend während der Inbetriebnahme der Thermoprozessanlage 100, beispielsweise im Stundenrhythmus. Die detaillierten Entscheidungen über Zeitpunkt und Größe der Korrekturen erfolgen auf Grundlage einer im Folgenden beschriebenen numerischen Berechnung.

Eine numerische Berechnung von Spannungen und Verformungen innerhalb einzelner Bauteile oder Bauteilgruppen der Thermoprozessanlage 100 erfolgt dadurch, dass ein numerisches Modell für die Gesamtheit der Bauteile einschließlich Gewölbe 18 und dem u.a. aus dem Ankersystem 32, 34 und den Widerlagerschienen 38 bestehendem Einspannsystem erstellt wird. In dieses numerische Modell gehen geometrische Parameter ein, das heißt Informationen über die räumliche Position und Form der einzelnen Bauteile. Außerdem sind relevante Materialwerte für die einzelnen Komponenten des Gewölbes 18 und des Einspannsystems Eingangswerte im numerischen Modell. Die Materialdaten der verwendeten Feuerfestmaterialien sind bereits im Vorhinein bekannt oder werden durch Probennahme und Bestimmung der Eigenschaften im Labor ermittelt. Weiterhin gehen in das numerische Modell auch eine noch zu beschreibende Temperaturführungskurve 46, die seitliche Verschiebung der Stehanker 32, dargestellt als Funktion der Position in Abhängigkeit von der Zeit, sowie die ebenfalls als Funktion der Zeit vorliegenden Informationen über die Temperaturwerte in verschiedenen Punkten oder verschiedenen Bereichen des Hauptprozessraums 10, welche in Form der durch die Kameras mit Temperaturfeldvisualisierung 24 erfassten thermographischen Aufnahmen bestehen, ein. Schließlich fließen auch Informationen über den Gewölbeanstieg, welche durch die Wegaufnehmer 20 erfasst werden, in das Modell ein. Durch das numerische Modell wird das mechanische und thermische Verhalten des Bassins 26, der Stirnwände 28, des Gewölbes 18 sowie des umgebenden Einspannsystems 30, 32, 34, 36 im Voraus berechnet. Dazu wird die zeitliche Entwicklung der instationären Temperaturfelder in den verschiedenen Bauteilgruppen sowie der darin auftretenden Spannungen, Kräfte und Verformungen simuliert. Es erfolgt ein ständiger Abgleich der Randbedingungen der Simulation mit erfassten Betriebzuständen bei der realen Inbetriebnahme der Thermoprozessanlage 100. Die an der Anlage erfassten Messwerte (bezüglich Position der Stehanker 32, des Gewölbes 18 sowie der Temperatur) werden dem Simulationsprogramm in periodischen Abständen übermittelt. Dadurch erfolgt eine ständige Angleichung des numerischen Modells an den Ist-Zustand.

Für eine definierte Temperaturführungskurve wird vorausschauend eine Verstellstrategie für das Gewölbe 18 simuliert. Alternativ können dem numerischen Modell auch verschiedene, optionale zeitliche Entwicklungen der Temperaturführungskurve 46 zugrunde gelegt werden, und dem Bedienpersonal kann die Möglichkeit gegeben werden, aus den sich ergebenden, verschiedenen zeitlichen Verläufen eine geeignete Strategie auszuwählen. Das numerische Simulationsprogramm sagt voraus, zu welchem Zeitpunkt eine wie geartete Korrektur erfolgen soll. Beispielsweise könnte das Programm empfehlen, fünf Stunden nach dem aktuellen Zeitpunkt eine seitliche Verschiebung der Stehanker 32 in Höhe von 5 mm vorzunehmen. Das Programm kann weiterhin voraussagen, dass durch die Vornahme dieser Handlung das Auftreten einer Fuge verhindert werden kann.

Das Simulationsprogramm kann derart angeglichen werden, dass die vom Programm errechneten Strategien bestimmte Kriterien erfüllen. So kann diejenige Strategie gesucht werden, bei welcher der zeitliche Anstieg des Gewölbes 18 möglichst konstant ist, oder bei welcher Spannungen innerhalb eines bestimmten Bauteiles möglichst konstant gehalten werden. Schon vor Inbetriebnahme der Thermoprozessanlage 100 können solche Strategien durch das gleiche numerische Modell berechnet werden, welches Bestandteil des erfindungsgemäßen Verfahrens ist. Der Simulation der zeitlichen Entwicklung des Inbetriebnahmeprozesses sind grundsätzlich nur durch die erforderliche Genauigkeit Grenzen bezüglich des simulierten Zeitraums gesetzt. Typischer Weise wird die Entwicklung der Verformungen, Spannungen und Temperaturverläufe für die folgenden 6, 12, 24 und 48 Stunden im Voraus berechnet. Schließlich empfiehlt das Simulationsprogramm Handlungen, welche die Schädigung der Bauteile verhindern, wenn das Programm das Auftreten bestimmter Ereignisse prognostiziert, z. B. wenn die Spannung in einem bestimmten Bereich oder wenn die Tiefe eines entstehenden Risses bestimmte Grenzwerte zu überschreiten drohen.

Durch das Simulationsprogramm kann ebenfalls eine tabellarische Planungsübersicht bezüglich des für die Kontrolle des Inbetriebnahmeprozesses und insbesondere für die Verstellung des Einspannsystems verantwortlichen Personals erstellt werden, wie folgende Tabelle beispielhaft veranschaulicht:

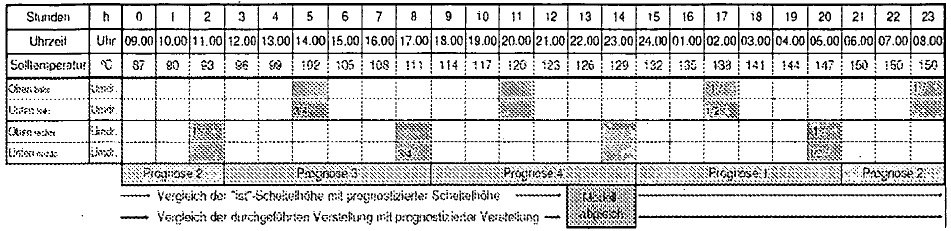

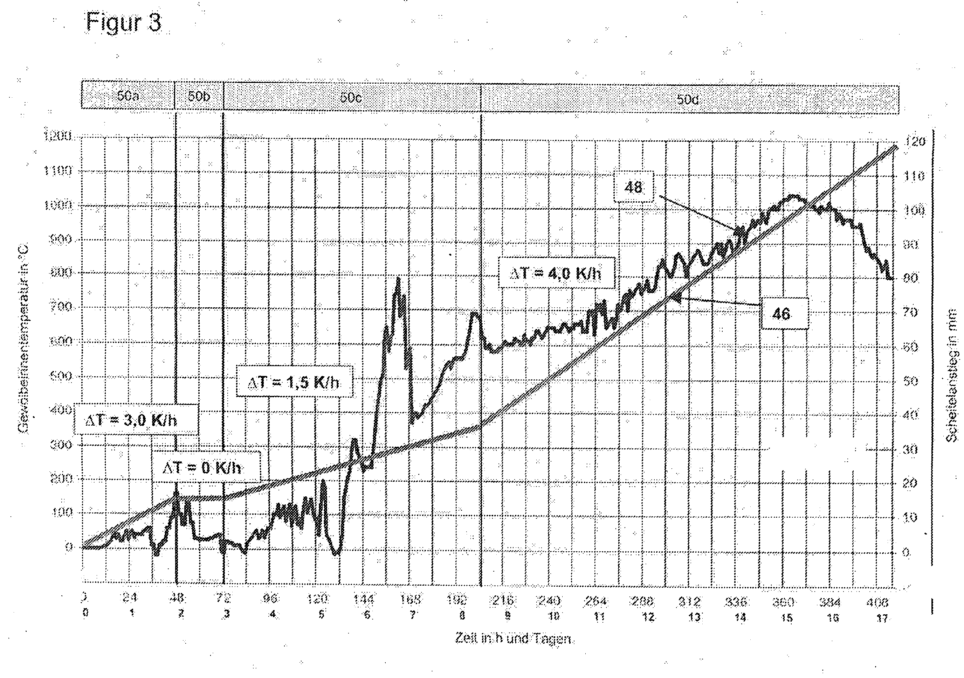

Figur 3 zeigt den zeitlichen Verlauf der Temperaturführungskurve 46 und des Scheitelanstiegs 48 des Gewölbes 18. Die Temperaturführungskurve 46 steht grundsätzlich vor Beginn des instationären Betriebszustandes, insbesondere der Inbetriebnahme der Thermoprozessanlage 100, fest. Sie wird allerdings auf Grundlage der numerischen Berechnung gegebenenfalls modifiziert. Sie dient als Führungsgröße für das Bedienpersonal, nach welcher die Aufheizbrenner 14 gefahren werden sollen. Da sich die verschiedenen Bereiche der Thermoprozessanlage 100 unterschiedlich schnell und insbesondere die Randbereiche langsamer aufheizen, werden während der Inbetriebnahme die Temperaturunterschiede ständig festgestellt, indem die thermografischen Aufnahmen der Kameras mit Temperaturfeldvisualisierung 24 ausgewertet werden. Die Temperaturführungskurve 46 weist in ihren verschiedenen Zeitabschnitten 50a, b, c, d verschiedene Raten der Temperaturerhöhungen auf, was durch die unterschiedliche thermische Dehnung der verschiedenen benutzten Materialien in unterschiedlichen Temperaturbereichen bedingt ist. Der Scheitelanstieg wird ständig dadurch kontrolliert, dass Korrekturen in Form von seitlichen Verschiebungen der Stehanker 32 vorgenommen werden. Da diese Korrekturen bis zu mehrmals stündlich erfolgen, ergibt sich der in Figur 3 dargestellte, im Vergleich zur Temperaturführungskurve 46 diskontinuierliche, Verlauf. Das beschriebene numerische Modell vermag auf Grundlage bestimmter Randbedingungen den zeitlichen Verlauf des instationären Betriebzustandes zu prognostizieren. Es kann jederzeit ein Abgleich mit den realen Randbedingungen, also dem Ist-Zustand, erfolgen. Somit kann der in Figur 3 dargestellte Scheitelanstieg das Ergebnis der prognostizierenden Berechnung, der reale Verlauf oder auch eine Mischung aus Prognose und Ist-Zustand sein. Im letzteren Fall entspricht der dargestellte Verlauf bis zu einem bestimmten Zeitpunkt dem realen Verlauf, während der weitere zeitliche Verlauf Ergebnis der vorausschauenden Simulation ist.

### BEZUGSZEICHENLISTE

- 10: Hauptprozessraum
- 12: Nebenprozessräume, Regeneratoren
- 14: Aufheizbrenner
- 16: Längsachse
- 18: Gewölbe
- 20: Wegaufnehmer
- 22: Messpunkte
- 24: Kamera mit Temperaturfeldvisualisierung
- 26: Bassin
- 28: Stirnwände
- 30: Stahlfundament
- 32: Stehanker
- 34: Zuganker
- 36: Widerlager
- 38: Widerlagerschienen
- 40: Gewölbestein
- 42: Wärmedämmung, Wärmedämmungsschicht
- 44: Aussparung
- 46: Temperaturführungskurve
- 48: Scheitelanstieg
- 50a, b, c, d: Zeitabschnitte

- 100: Thermoprozessanlage

## Patentansprüche

1. Verfahren zur Kontrolle eines instationären Betriebszustandes in einer Thermoprozessanlage (100), welche ein Gewölbe umfasst, deren Widerlager (36) durch ein Ankersystem gestützt wird, **gekennzeichnet durch** folgende Verfahrensschritte:
- Aufheizen oder Abheizen der Thermoprozessanlage (100) auf Grundlage einer zeitabhängigen Temperaturführungskurve T(t) (46);
- Erfassen von Temperaturmesswerten T_{MW}(t, r) während des Aufheizens oder Abheizens an verschiedenen Positionen der Thermoprozessanlage (100), wobei die Temperaturmesswerte T_{MW}(t, r) **durch** ein thermografisches Verfahren **durch** den Einsatz einer oder mehrerer Kameras mit Temperaturfeldvisualisierung (24) erfasst werden;
- numerische Berechnung von Spannungen und Verformungen innerhalb mindestens eines Bauteils oder einer Bauteilgruppe der Thermoprozessanlage (100), wobei die numerische Berechnung zumindest auf Grundlage von geometrischen Parametern, von Materialwerten und auf Grundlage der erfassten Temperaturmesswerte T_{MW}(t, **r**) erfolgt;
- Vornahme von Korrekturen auf Grundlage der numerischen Berechnung in Form einer Verschiebung des Ankersystems.

2. Verfahren nach Anspruch 1, **dadurch gekennzeichnet, dass** auf Grundlage der numerischen Berechnung eine Korrektur der Temperaturführungskurve T(t) (46) vorgenommen wird.

3. Verfahren nach Anspruch 1 oder 2, **dadurch gekennzeichnet, dass** im Rahmen der numerischen Berechnung Erwärmungs- und Dehnungsvorgänge im Bauteil oder in der Bauteilgruppe berücksichtigt werden.

4. Verfahren nach einem der vorangehenden Ansprüche, **dadurch gekennzeichnet, dass** die numerische Berechnung mithilfe einer Finite-Elemente-Methode erfolgt.

5. Verfahren nach einem der vorangehenden Ansprüche, **dadurch gekennzeichnet, dass** bei der numerischen Berechnung eine Angleichung an in der Thermoprozessanlage (100) insbesondere durch Wegaufnehmer (20) erfasste Positionsmesswerte erfolgt.

6. Verfahren nach einem der vorangehenden Ansprüche, **dadurch gekennzeichnet, dass** das Ankersystem Paare von vertikalen Stehankern (32) umfasst, welche über das Gewölbe hinweg durch horizontale Zuganker (34) verbunden sind, und dass die Widerlager (36) des Gewölbes auf Widerlagerschienen (38) angeordnet sind, welche mit den Stehankern (32) verbunden oder an diesen befestigt sind.

## Claims

1. A method for controlling a non-stationary operating state in a thermal process plant (100) comprising a vault with an abutment (36) that is supported by an anchor system, **characterized by** the following process steps:
- Heating up or cooling down the thermal process plant (100) based on a time-dependent temperature guide curve T(t) (46);
- Collecting temperature measurement values T_{MW}(t, **r**) during the heating up or cooling down process at various positions of the thermal process plant (100), wherein the temperature measurement values T_{MW}(t, r) are collected by means of a thermographic method using one or more cameras with temperature field visualization (24);
- Numerical calculation of tensions and deformations inside at least one component or component group of the thermal process plant (100), wherein the numerical calculation is at least based on geometrical parameters, material values, and based on the collected temperature measurement values T_{MW}(t, r);
- Making adjustments based on the numerical calculation in the form of moving the anchor system.

2. The method according to claim 1, **characterized in that** the temperature guide curve T(t) (46) is adjusted based on the numerical calculation.

3. The method according to claim 1 or 2, **characterized in that** heating and expansion processes in the component or component group are taken into account during the numerical calculation.

4. The method according to any one of the preceding claims, **characterized in that** the numerical calculation is performed using the finite element method.

5. The method according to any one of the preceding claims, **characterized in that** the numerical calculation includes an adjustment for position measurement values collected in the thermal process plant (100) especially by displacement transducers (20).

6. The method according to any one of the preceding claims, **characterized in that** the anchor system includes pairs of vertical anchor bars (32) which are interconnected over the top of the vault by horizontal tension bars (34), and **in that** the abutments (36) of the vault are disposed on abutment rails (38) which are connected with, or fastened to, the anchor bars (32).

## Revendications

1. Procédé de contrôle d'un état de fonctionnement non stationnaire dans une installation de traitement thermique (100) qui comprend une voûte dont la butée (36) est supportée par un système d'ancrage, **caractérisé par** les étapes de procédé suivantes :
- Marche ou arrêt du chauffage de l'installation de traitement thermique (100) sur la base d'une courbe de guidage de température T(t) (46) qui est fonction du temps ;
- Enregistrement de valeurs de mesure de température T_{MW}(t, r) pendant la marche ou l'arrêt du chauffage dans différentes positions de l'installation de traitement thermique (100), les valeurs de mesure de température T_{MW}(t, r) étant enregistrées par un procédé thermographique par l'utilisation d'une ou de plusieurs caméras avec visualisation des zones de température (24) ;
- Calcul numérique de tensions et de déformations à l'intérieur d'au moins un composant ou d'un groupe de composants de l'installation de traitement thermique (100), le calcul numérique s'effectuant au moins sur la base de paramètres géométriques, de valeurs de matériau et sur la base des valeurs de mesure de température T_{MW}(t, r) enregistrées ;
- Réalisation de corrections sur la base du calcul numérique sous la forme d'un déplacement du système d'ancrage.

2. Procédé selon la revendication 1, **caractérisé en ce que**, sur la base du calcul numérique, une correction de la courbe de guidage de température T(t) (46) est réalisée.

3. Procédé selon la revendication 1 ou 2, **caractérisé en ce que**, dans le cadre du calcul numérique, des processus d'échauffement et de dilatation dans le composant ou dans le groupe de composants sont pris en considération.

4. Procédé selon une des revendications précédentes, **caractérisé en ce que** le calcul numérique s'effectue à l'aide d'une méthode par éléments finis.

5. Procédé selon une des revendications précédentes, **caractérisé en ce que**, lors du calcul numérique, il est effectué une harmonisation avec des valeurs de mesure de position enregistrées en particulier par des capteurs de déplacement dans l'installation de traitement thermique (100).

6. Procédé selon une des revendications précédentes, **caractérisé en ce que** le système d'ancrage comprend des paires de montants d'ancrage verticaux (32) qui sont raccordés à travers la voûte par des ancres de traction horizontales (34), et **en ce que** les butées (36) de la voûte sont disposées sur des rails de butée (38) qui sont raccordés aux montants d'ancrage verticaux (32) ou qui sont fixés sur ceux-ci.
